# EUROPEAN PATENT SPECIFICATION

(11) **EP 4 336 246 B1**
(45) Date of publication and mention of the grant of the patent: **31.12.2025**
(21) Application number: 23194355.6
(22) Date of filing: 30.08.2023
(51) Int. Cl.: G02B 27/01, G02B 27/62, G02B 6/42

(54) **APPARATUSES, SYSTEMS, AND METHODS FOR ALIGNING DISPLAY PROJECTOR ASSEMBLIES INCLUDED IN HEAD-MOUNTED DISPLAYS**
VORRICHTUNGEN, SYSTEME UND VERFAHREN ZUR AUSRICHTUNG VON IN KOPFMONTIERTEN ANZEIGEN ENTHALTENEN ANZEIGEPROJEKTORANORDNUNGEN
APPAREILS, SYSTÈMES ET PROCÉDÉS D'ALIGNEMENT D'ENSEMBLES DE PROJECTEURS D'AFFICHAGE INCLUS DANS DES VISIOCASQUES

(30) Priority: 06.09.2022 US 202263404141 P; 24.08.2023 US 202318455425
(43) Date of publication of application: 13.03.2024
(73) Proprietor: Meta Platforms Technologies, LLC, Menlo Park, CA 94025 (US)
(72) Inventor: SCHMITZ, Aaron, Menlo Park, 94025 (US); SCHULTZ, James, Menlo Park, 94025 (US)
(74) Representative: Murgitroyd & Company

(56) References cited:
- WO-A1-2019/077614
- WO-A1-2021/138607
- WO-A1-2022/167126
- CN-A- 111 512 211

## Description

### TECHNICAL FIELD

The present disclosure is generally directed to apparatuses, systems, and methods for aligning display projector assemblies included in head-mounted displays.

### BACKGROUND

Artificial reality is a form of reality that has been adjusted in some manner before presentation to a user, which may include, for example, a virtual reality, an augmented reality, a mixed reality, a hybrid reality, or some combination and/or derivative thereof. Artificial reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

Head-mounted displays (HMDs) including one or more near-eye displays are often used to present visual content to a user for use in artificial-reality applications. One type of near-eye display includes a waveguide that directs light from a projector to a location in front of the user's eyes. Because of the visual sensitivity of human eyes, slight deviations in optical quality may be glaringly apparent to the user. Unfortunately, such deviations may be caused and/or exacerbated by slight variations that may exist between different light projectors. Compensation for such individual variations can be important to improve the user's experience viewing visual content presented by near-eye displays.

WO 2019/077614 A1 describes a head-mounted augmented reality device including a pair of optical modules for the right and left eyes of the user, each having a collimating display source optically coupled to a light guide for directing image illumination towards an eye of the user. A support structure is supported by the head of the user. An optical bench provides a first set of alignment features for aligning and affixing the right optical module and a second set of alignment features for aligning and affixing the left optical module. A suspension arrangement suspends the optical bench relative to the support structure. The optical bench provides the sole mechanical connection between the pair of optical modules and the support structure.

WO 2022/167126 A1 describes an augmented reality (AR) or virtual reality (VR) device comprising: a waveguide, a projector and a housing. The waveguide comprises an input region configured to receive light incident along a first direction, and an output region, wherein the waveguide is configured such that a first portion of the light passes along the waveguide, in a direction substantially perpendicular to the first direction, by total internal reflection towards the output region where it is outcoupled to a viewer to thereby form an image. The projector is arranged adjacent to the waveguide, the projector for projecting the light into the waveguide at the input region. The housing is for holding the projector and the waveguide with respect to one another, the housing comprising an aperture, the aperture arranged adjacent to the input region and spaced therefrom along the first direction on an opposite side of the input region to the projector.

WO 2021/138607 A1 describes modular waveguide displays including: a modular frame; a waveguide lens attached to the modular frame, where the waveguide lens in configured to be attached to the modular frame to locate one or more waveguides within the waveguide lens in front of the modular frame; and an optical engine which is configured to be attached to the modular frame, wherein, when the optical engine is attached to the modular frame, the optical engine is configured to provide image containing information to a front side of the one or more waveguides.

CN 111 512 211 A describes a personal display device for displaying virtual images to a wearer. The personal display device includes a frame having a right temple section, a left temple section, a right rear section, a left rear section, a right eye see-through section, and a left eye see-through section; a projection display device connected to the frame for projecting an image to the wearer; at least one waveguide stack module connected to the frame for propagating image-bearing light beams along a length of the at least one waveguide stack module, the at least one waveguide stack module being configured to receive the image from the projection display device and detected touch motions of the wearer sensed by the touchpad including sensing directions of the touch motions of the wearer.

### SUMMARY

According to a first aspect, there is provided a method comprising: determining an optical angle of an output of a display projector assembly relative to a base of the display projector assembly; physically altering, based on the determined optical angle of the output of the display projector assembly, a mating structure included within a frame such that, when the base of the display projector assembly is mated to the frame via the mating structure, the output of the display projector assembly is optically aligned with the frame along a predetermined optical axis; and mating the base of the display projector assembly to the frame via the altered mating structure.

Determining the optical angle of the output of the display projector assembly relative to the base of the display projector assembly may comprise measuring the optical alignment of the output of the display projector assembly relative to a datum of the display projector assembly. Altering the mating structure within the frame may comprise altering the mating structure to account for an angle of the output of the display projector assembly relative to the datum of the display projector assembly.

Determining the optical angle of the output of the display projector assembly relative to the base of the display projector assembly may comprise measuring the output of the display projector assembly via a collimator.

The mating structure may comprise a machinable surface. Altering the mating structure may comprise machining at least one aspect of the machinable surface.

The display projector assembly may comprise a mating surface. Mating the display projector assembly to the frame via the altered mating structure may comprise mating the mating surface of the display projector assembly to the altered mating structure.

The mating structure may comprise at least one mounting post configured to be received by a corresponding post receptacle included in the display projector assembly.

Altering the mating structure may comprise adjusting a length of the at least one mounting post based on the determined optical alignment of the display projector assembly.

The at least one mounting post may comprise at least three mounting posts.

For each mounting post included in the mating structure, mating the display projector assembly to the frame via the altered mating structure may comprise causing the post receptacle to receive the mounting post.

The method may further comprise: mounting a waveguide to the frame; and aligning the output of the display projector assembly with an input grating of the waveguide.

The frame may be a head-mounted display frame.

According to a second aspect, there is provided a system comprising: an optical sensor configured to determine an optical angle of an output of a display projector assembly relative to a base of the display projector assembly; an altering device configured to physically alter a mating structure included within a frame based on the determined optical angle of the display projector assembly such that, when the display projector assembly is mated to the frame via the mating structure, the output of the display projector assembly is optically aligned with the frame along a predetermined optical axis; and a mating device configured to mate the display projector assembly to the frame via the altered mating structure.

The optical sensor may be further configured to determine the optical angle of the output of the display projector assembly by measuring the optical angle of the output of the display projector assembly relative to a datum of the display projector assembly.

The optical sensor may be further configured to determine the optical angle of the output of the display projector assembly by measuring the output of the display projector assembly via a collimator.

The mating structure of the frame may comprise a machinable planar surface. The altering device may be further configured to physically alter the mating structure by machining at least one aspect of the machinable planar surface.

The display projector assembly may comprise a mounting structure. The mating device may mate the display projector assembly to the frame via the machined mating structure by mating the mounting structure of the display projector assembly to the altered mating structure of the frame.

The frame may comprise at least one mounting post configured to be received by a corresponding post receptacle included in the display projector assembly.

The mating device may be further configured to, for each mounting post included in the frame, mate the display projector assembly to the frame via the altered mating structure by causing the corresponding post receptacle to receive the mounting post.

### BRIEF DESCRIPTION OF THE DRAWINGS

The accompanying drawings illustrate a number of examples and are a part of the specification. Together with the following description, these drawings demonstrate and explain various principles of the present disclosure.
FIG. 1 is a plan view of a head-mounted display.
FIG. 2 is a detailed view of a light projector mounted to a frame of the head mounted display, taken at dashed circle A of FIG. 1.
FIGS. 3A-3E illustrate various respective configurations of light projectors that may be used in head-mounted displays.
FIG. 4 illustrates a plan view of a display projector assembly and a frame.
FIG. 5 is a flow diagram of an example method for aligning display projector assemblies included in head-mounted displays.
FIG. 6 illustrates determining an optical angle of an output of a display projector assembly relative to a base of a display projector assembly.
FIG. 7 illustrates optical alignment of a projected pattern as viewed by a camera.
FIG. 8 illustrates a detailed view of a mounting structure.
FIG. 9 illustrates a detailed view of an additional mounting structure.
FIG. 10 illustrates altering, based on the determined optical angle of the output of the display projector assembly, a mating structure included within a frame.
FIG. 11 is an illustration of example augmented-reality glasses that may be used in connection with embodiments of this disclosure.
FIG. 12 is an illustration of an example virtual-reality headset that may be used in connection with embodiments of this disclosure.

Throughout the drawings, identical reference characters and descriptions indicate similar, but not necessarily identical, elements. While the example embodiments described herein are susceptible to various modifications and alternative forms, specific embodiments will be described in detail herein. However, the example embodiments described herein are not intended to be limited to the particular forms disclosed. Rather, the present disclosure covers all modifications, equivalents, and alternatives falling within this disclosure.

### DETAILED DESCRIPTION

As will be explained in greater detail below, embodiments of the instant disclosure may include an optical sensor that determines an optical angle of an output of a display projector assembly relative to a base of the display projector assembly. Embodiments may also include an altering device (e.g., a cutting device, a scraping device, a drilling device, a planing device, etc.) that physically alters a mating structure included within a frame based on the determined optical angle of the display projector assembly such that, when the display projector assembly is mated to the frame via the mating structure, the output of the display projector assembly is optically aligned with the frame along a predetermined optical axis. Embodiments may also include a mating device that mates (e.g., fastens, affixes, joins, binds, etc.) the display projector assembly (i.e., the base of the display projector assembly) to the frame via the altered mating structure.

By measuring the optical output of display projector assemblies, and by then machining the mating geometry into the mating frame, the apparatuses, systems, and methods described herein may result in thinner, more consistent bonds between display projector assemblies and frames. This may further enable production of thinner, more optically stable head-mounted display devices, and improved user experiences with such head-mounted display devices.

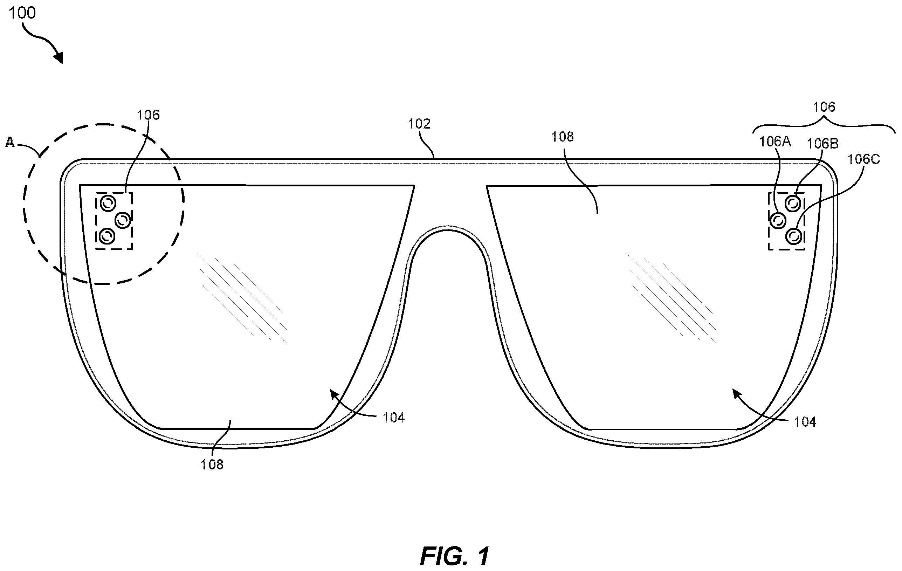

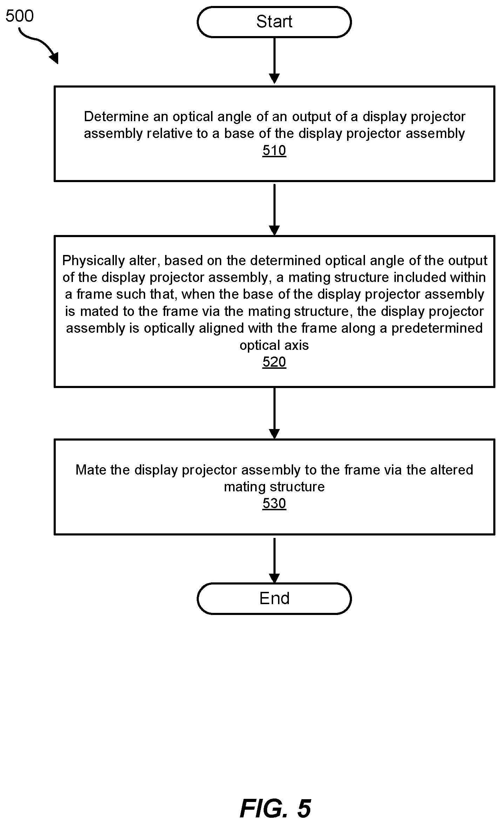

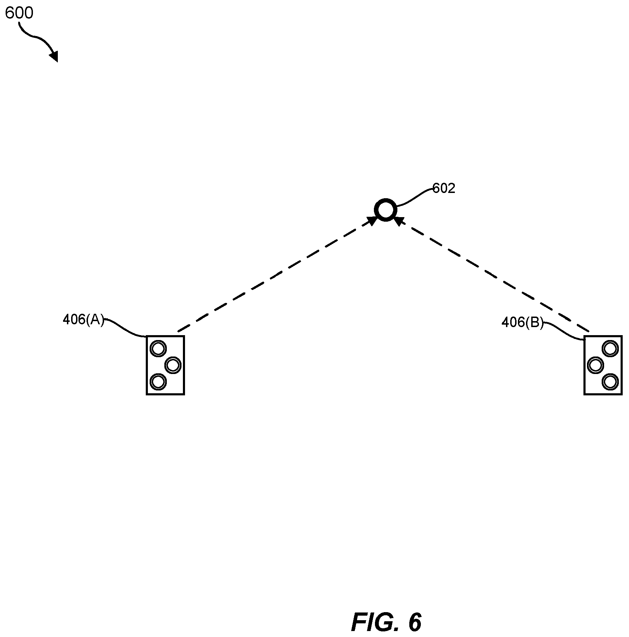

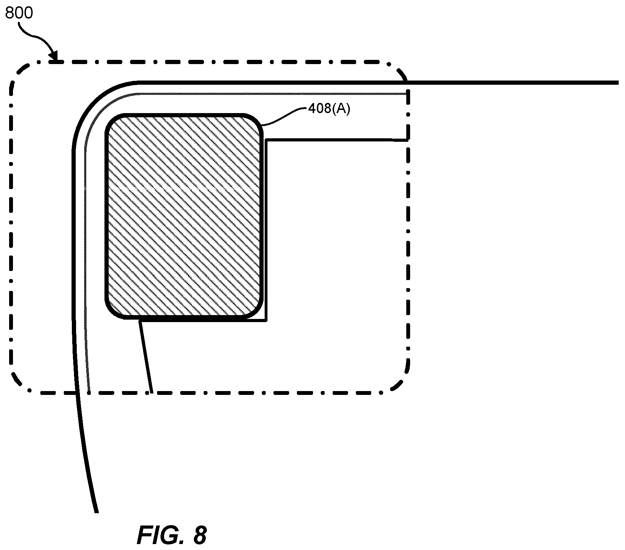

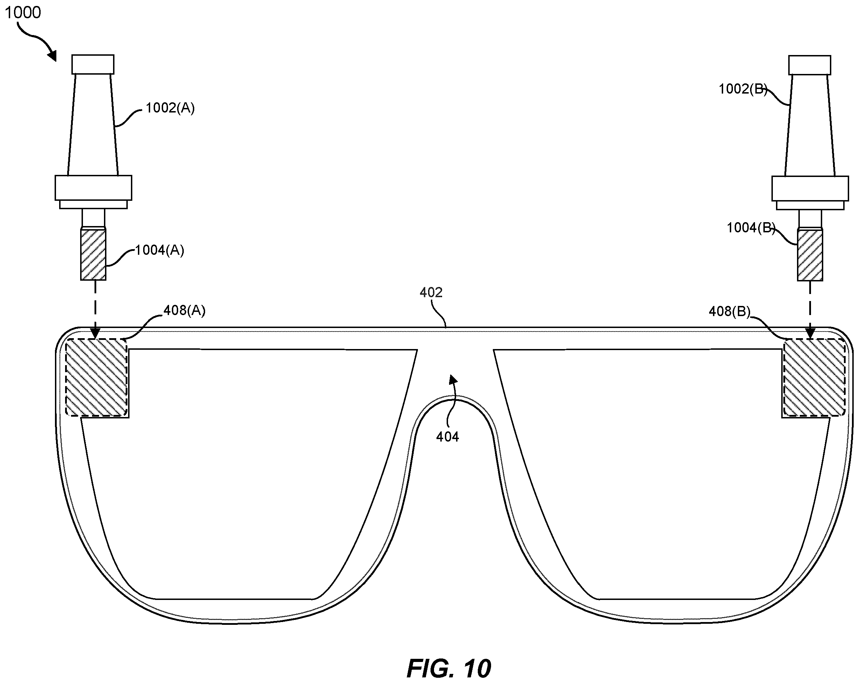

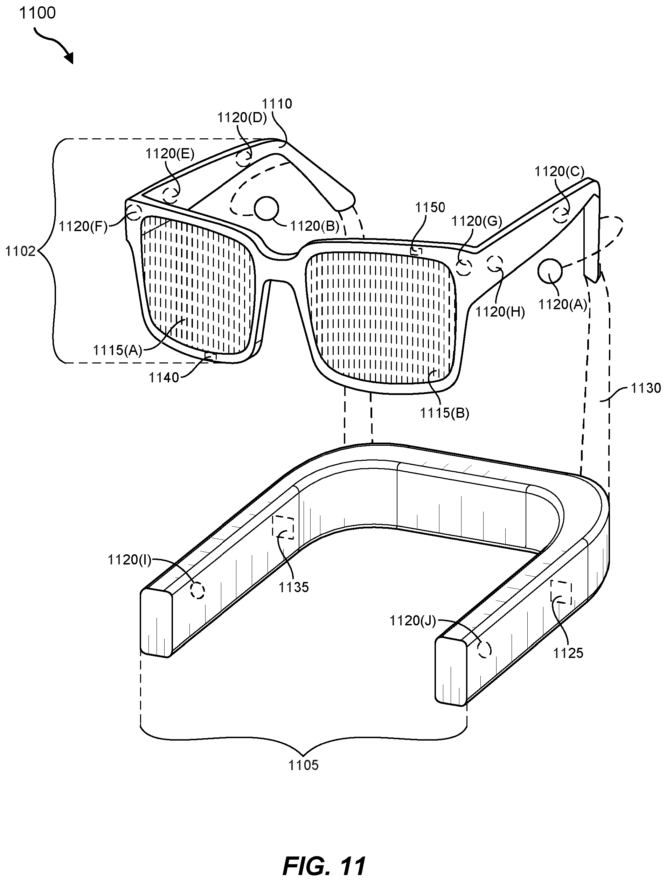

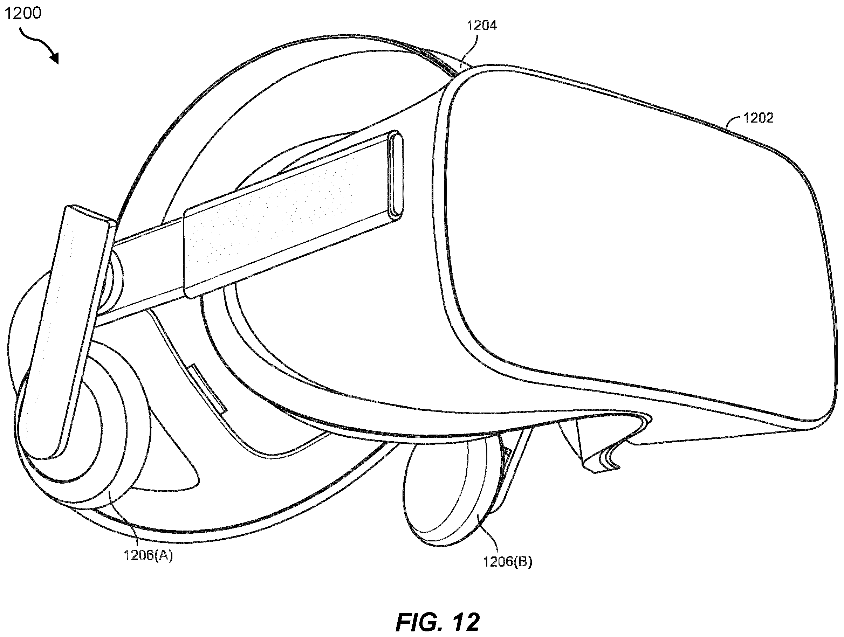

With reference to FIGS. 1-4, the following will describe example head mounted displays and components thereof, according to embodiments of the present disclosure. An example method of aligning display projector assemblies included in head-mounted displays will then be described with reference to FIG. 5. Determining of an optical alignment of a display projector assembly will then be described with reference to FIGS. 6-7. Various example mating structures will be described with reference to FIGS. 8-9. Next, physically altering a mounting structure based on a determined optical alignment of a display projector assembly and mating the display projector assembly to an altered mating structure will be described with reference to FIG. 10. Finally, example augmented-reality glasses and virtual-reality headsets will be descried with reference to FIG. 11 and FIG. 12.

FIG. 1 is a plan view of a head-mounted display 100, according to at least one embodiment of the present disclosure. The head-mounted display 100 may include a frame 102 and a display assembly 104 coupled to the frame 102. The display assembly 104 for each eye may include a display projector assembly 106 (shown in dashed lines in FIG. 1) and a waveguide 108 configured to direct images from the display projector assembly 106 to a user's eye. In some examples, the display projector assembly 106 may include a plurality of (e.g., three) subprojectors 106A, 106B, and 106C that are configured to project light of different wavelengths (e.g., colors, such as red, green, blue, infrared, etc.). The waveguide 108 may include at least one input grating 110 positioned adjacent to and optically aligned with the display projector assembly 106. The input grating 110 may be configured to enable light from the subprojectors 106A, 106B, and 106C to enter into the waveguide 108 to be directed to a presentation portion (e.g., a central portion) of the waveguide 108 for presentation to the user's eye. For example, as shown in FIG. 1 in dashed lines, the input grating 110 may include three optical apertures respectively aligned with the three subprojectors 106A, 106B, and 106C of the display projector assembly 106.

In some examples, the head-mounted display 100 may be implemented in the form of augmented-reality glasses. Accordingly, the waveguide 108 may be at least partially transparent to visible light to allow the user to view a real-world environment through the waveguide 108. Images presented to the user's eye by the display projector assemblies 106 may overlay the user's view of the real-world environment.

In some embodiments, the waveguide 108 may be secured to the frame 102 in a variety of ways, such as with an adhesive material, one or more fasteners, an adhesive, a clip, one or more flexure elements, etc., such as after completion of the optical alignment of the waveguides 108 with the respective light projectors 106. For example, an adhesive material may be positioned between the waveguide 108 and the frame 102 at multiple (e.g., two, three, or more than three) distinct locations to maintain the relative position between the waveguide 108 and the display projector assembly 106. In additional embodiments, the waveguide 108 may be secured to the frame 102 in a continuous manner, such as along one or more peripheral edges of the waveguide 108 by an adhesive, a clip, a frame cover element, etc.

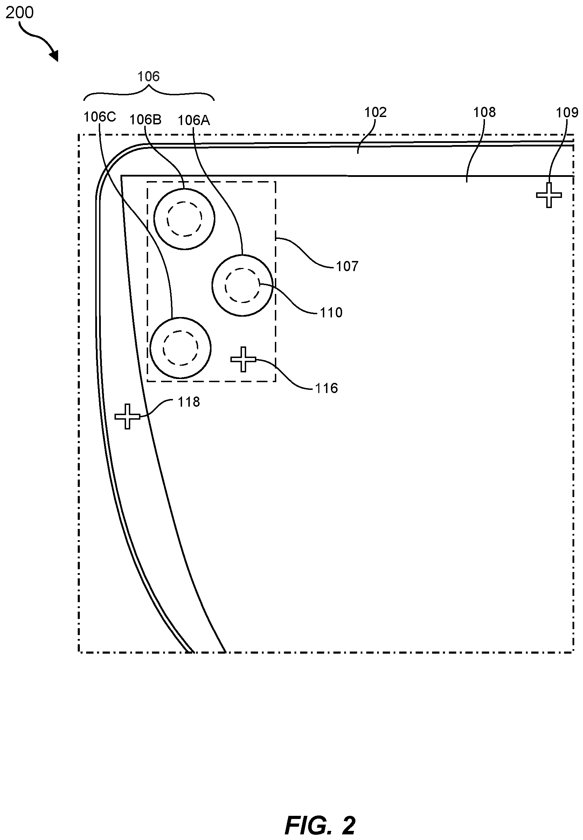

FIG. 2 includes a detailed view 200 of the display projector assembly 106 mounted to the frame 102 of the head-mounted display 100, taken at dashed circle A of FIG. 1, according to at least one embodiment of the present disclosure. As shown in FIG. 2, the display projector assembly 106 may be mounted on the frame 102 of the head-mounted display 100, such as in an upper corner of the frame 102. The first subprojector 106A may include a blue light source, the second subprojector 106B may include a red light source, and the third subprojector 106C may include a green light source. Other colors and arrangements of the subprojectors 106A, 106B, and 106C may also be possible.

To assemble the head-mounted display 100, the three subprojectors 106A, 106B, and 106C may be initially assembled with each other (e.g., three subprojectors mounted to a common substrate 107, three collimating lenses aligned on the three subprojectors, etc.) to form the display projector assembly 106 as a unit. The display projector assembly 106 (e.g., the substrate 107 of the display projector assembly 106) may include one or more projector fiducial marks 116, which may be used in optically aligning (e.g., positioning, orienting, securing) the display projector assembly 106 with the frame 102. In some examples, the frame 102 may likewise include one or more frame fiducial marks 118 to assist in the optical alignment of the display projector assembly 106 with the frame 102.

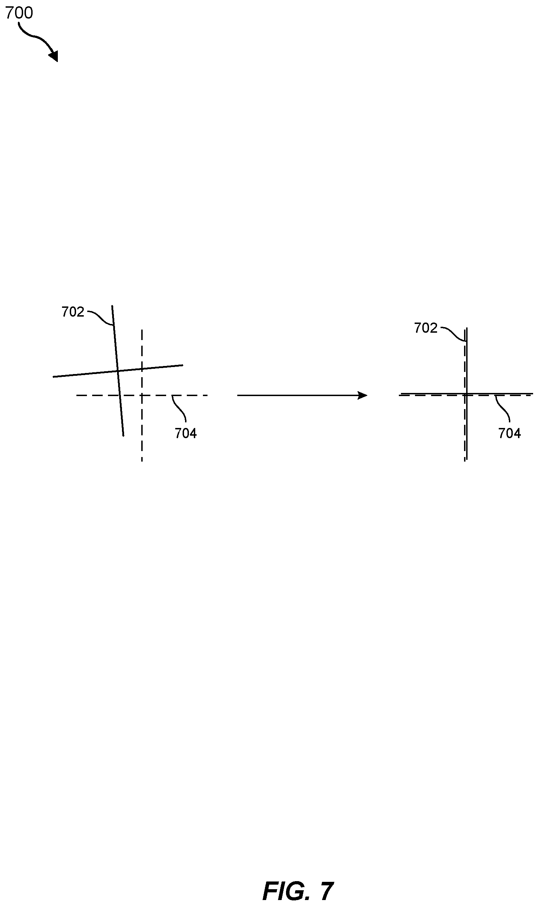

As will be described in greater detail below, optical alignment of the display projector assembly 106 relative to the frame 102 may involve viewing the display projector assembly 106 and/or frame 102 during placement of the display projector assembly 106 in or on the frame 102 with one or more cameras, which may be used to identify the location and orientation of the projector fiducial mark(s) 116 relative to the location and orientation of the frame fiducial mark(s) 118. The projector fiducial mark(s) 116 and the frame fiducial mark(s) 118 are each shown in FIG. 2 in the shape of a plus sign. In additional examples, other shapes, physical features (e.g., of the display projector assembly 106 and/or of the frame 102), reflective surfaces, or other optical identifiers may be used to optically align the display projector assembly 106 relative to the frame 102. In some embodiments, the display projector assembly 106 may be aligned relative to the frame 102 using an image projected by the display projector assembly 106, such as is explained below with reference to FIG. 7.

After the display projector assembly 106 is aligned with and secured to the frame 102, the waveguide 108 may be aligned with the display projector assembly 106 and secured to the frame 102. For example, the waveguide 108 may include a waveguide fiducial mark 109, which may be used in optically aligning (e.g., positioning, orienting, securing) the waveguide 108 to the frame 102 and/or to the display projector assembly 106. In addition, the input gratings 110 of the waveguide 108 may be optically aligned with the subprojectors 106A, 106B, and 106C. In some examples, the input gratings 110 may be smaller than respective apertures of the subprojectors 106A, 106B, and 106C as shown in FIG. 2. In additional examples, the input gratings 110 may be substantially the same size as or larger than the respective apertures of the subprojectors 106A, 106B, and 106C.

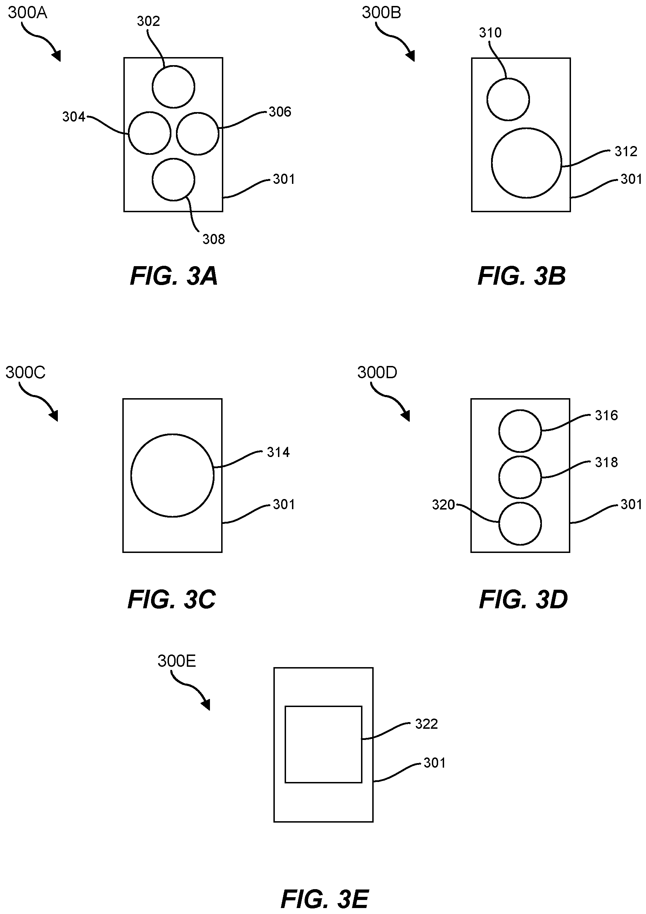

FIG. 3A through FIG. 3E illustrate various respective configurations of display projector assemblies 300A-300E that may be used in head-mounted displays, such as any of the head-mounted displays described herein, according to several embodiments of the present disclosure.

As shown in FIG. 3A, a display projector assembly 300A may include four subprojectors 302, 304, 306, 308 arranged on a substrate 301. The four subprojectors 302, 304, 306, 308 may be positioned on the substrate 301 in any suitable configuration, such as in a diamond shape as shown in FIG. 3A, in a straight line, in a curve, in a rectangle shape, etc. The four subprojectors 302, 304, 306, 308 may be configured to respectively emit light of four different wavelengths, such as red, green, blue, and infrared. Each of the subprojectors 302, 304, 306, 308 may include an array of pixels that may be selectively activated to be combined to create an image for display to a user. In some examples, one of the subprojectors 302, 304, 306, 308 may be configured to emit infrared light, such as a structured infrared light pattern, an infrared glint, or a flood of infrared light to facilitate eye tracking.

As shown in FIG. 3B, a display projector assembly 300B may include two subprojectors 310, 312 on the substrate 301. FIG. 3B illustrates that the subprojectors 310 may be different sizes. For example, the subprojector 310 may be configured to emit light of one wavelength or range of wavelengths and the larger subprojector 312 may be configured to emit light of another, different wavelength or range of wavelengths. In one example, the subprojector 310 may be configured to emit infrared light (e.g., for eye tracking) and the larger subprojector 312 may be configured to emit visible light (e.g., for producing an image for display to the user).

As shown in FIG. 3C, a display projector assembly 300C may include a single light source 314 on the substrate 301. The single light source 314 may be configured to emit light of a single wavelength or of multiple wavelengths. For example, the single light source 314 may include an array of pixels capable of emitting various colors and patterns.

As shown in FIG. 3D, a display projector assembly 300D may include three subprojectors 316, 318, 320. Three subprojectors 106A, 106B, 106C were illustrated in FIGS. 1 and 2 in a triangular configuration. However, as illustrated in FIG. 3D, the three subprojectors 316, 318, 320 may be arranged in a line.

In examples and figures described above, the subprojectors and light sources are illustrated as each having a circular shape. However, the present disclosure is not so limited. For example, as shown in FIG. 3E, a display projector assembly 300E may include one or more light sources 322 having a non-circular shape, such as square or rectangular.

Accordingly, display projector assemblies of various shapes, sizes, and arrangements of light sources and/or subprojectors may be used in conjunction with embodiments of the present disclosure.

One or more light subprojectors may be included in one or more display projector assemblies. A display projector assembly may include (1) at least one light subprojector, and (2) at least one base. In some examples, the base may include any suitable material or surface that may effectively mate the display projector assembly to a frame like frame 102 via a mating structure included in the frame.

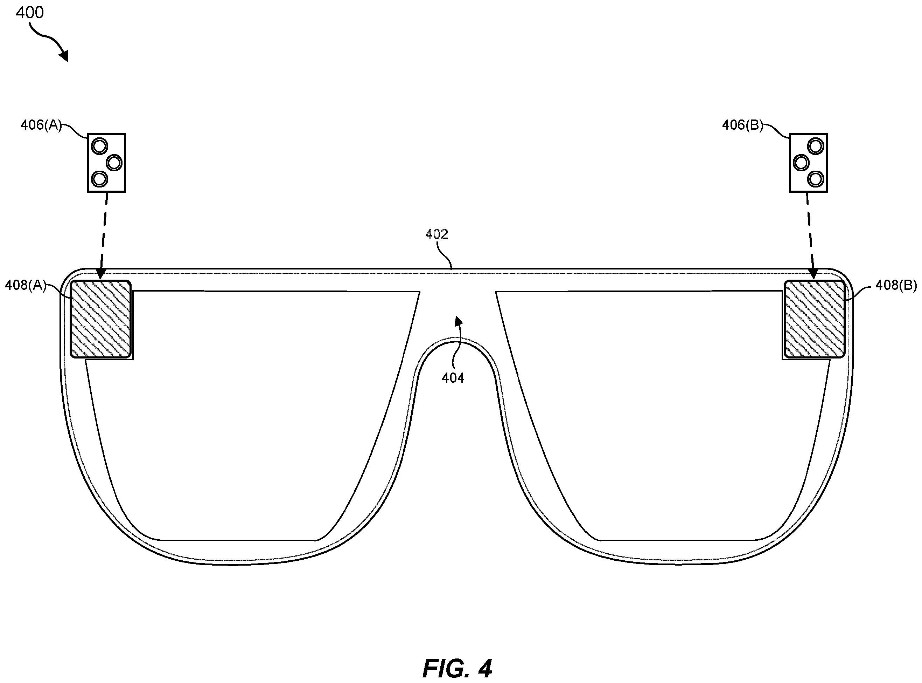

By way of illustration, FIG. 4 shows a view 400 of a frame 402 having an interior surface 404, where the interior surface 404 may represent a surface of frame 402 that may face a user when the user dons a head-mounted display that includes the frame 402. FIG. 4 shows display projector assemblies 406(A) and 406(B) that may be mated to the frame 402 via respective mating structures 408(A) and 408(B). As explained below, the mating structures 408(A) and 408(B) may be formed (e.g., machined, molded, etc.) to size to align the display projector assemblies 406(A) and 406(B) with the frame 402 and/or with each other. Although not shown in FIG. 4, each of the display projector assemblies 406(A) and 406(B) may include a base that may serve as a suitable mounting point or surface when mated to a respective mating structure 408(A) and 408(B).

As described above, proper alignment of display projector assemblies may be helpful to providing users with an improved experience when viewing visual content presented by near-eye displays. Accordingly, FIG. 5 is a flow diagram of an example method 500 for aligning display projector assemblies included in head-mounted displays. The operations shown in FIG. 5 may be performed by any suitable way and/or by any suitable system and/or device. In some examples, computer-executable code and/or a suitably configured computing system may direct one or more systems and/or devices to execute the steps shown in FIG. 5.

As illustrated in FIG. 5, at the operation 510, an optical angle of an output of a display projector assembly may be determined relative to a base of the display projector assembly. Operation 510 may be accomplished in any suitable way. By way of illustration, FIG. 6 shows a view 600 of the display projector assembly 406(A) and the display projector assembly 406(B). FIG. 6 also shows an optical sensor 602 that may be used to determine an optical angle of an output of display projector assembly 406(A) relative to a base of the display projector assembly 406(A) and/or an optical angle of an output of the display projector assembly 406(B) relative to a base of the display projector assembly 406(B).

FIG. 7 includes a view 700 that illustrates optical alignment of a projected pattern 702 as viewed by the optical sensor 602, according to at least one embodiment of the present disclosure. The projected pattern 702 may be aligned with a camera target 704. The projected pattern 702 may be produced by a display projector assembly or subprojector, such as the display projector assembly 106 described above and/or a light subprojector included in the display projector assembly 406(A) and/or the display projector assembly 406(B). In additional or alternative examples, the projected pattern may be produced by an optical collimator. In some examples, the projected pattern may define and/or be within a known or predefined relationship to a datum of the light subprojector and/or of the display projector assembly. Optical sensor 602 (i.e., one or more cameras included in optical sensor 602) may view the projected pattern 702 and compare the location and orientation of the projected pattern 702 to the camera target 704.

The display projector assembly may be moved (e.g., laterally shifted, angled, rotated, etc.) to align the projected pattern 702 with the camera target 704 to an acceptable resolve (e.g., within an acceptable tolerance). In some examples, the alignment of the projected pattern 702 with the camera target 704 may be performed while exposing the display projector assembly 106 and/or the frame 102 to conditions that may be expected during use of the resulting assembly. For example, a heat load may be applied to the display projector assembly 106 during alignment to mimic thermal loading that may occur during use.

Once an alignment between the projected pattern 702 with the camera target 704 is determined, the optical sensor 602 and/or any other suitable system that may be in communication with optical sensor 602 may determine an optical angle between the output of the display projector assembly (e.g., the projected pattern 702) and a base of the display projector assembly. For example, an angle between an output of the display projector assembly and the base of the display projector assembly may be known and/or predetermined. Hence, the optical sensor may determine an optical angle of the output of the display projector assembly relative to the base of the display projector assembly by determining a total angle including (1) the determined alignment angle between the projected pattern 702 with the camera target 704 and (2) the predetermined angle between the output of the display projector assembly and the base of the display projector assembly.

Returning to FIG. 5, at the operation 520, a mating structure included within a frame may be physically altered based on the determined optical angle of an output of a display projector assembly, such that, when the base of the display projector assembly is mated to the frame via the altered mating structure, the output of the display projector assembly is optically aligned with the frame along a predetermined optical axis.

As described above in reference to FIG. 4, the frame 402 may include one or more mating structures 408 (e.g., mating structure 408(A) and mating structure 408(A) in FIG. 4). In some embodiments, each mating structure may include a machinable surface that a suitable machining device (a cutting device, a grinding device, a scraping device, a drilling device, a planing device, etc.) that may be configured to adjust at least one aspect of the machinable surface included in the mating structure.

An altering device may include any device that may be configured to alter and/or adjust one or more aspects of a mating structure as described herein. For example, an altering device may include, without limitation, a grinder, a drill, a planer, an additive manufacturing device, a machining device, a heat gun, and so forth.

By adjusting at least one aspect of the mating structure (e.g., by adjusting an angle of the mating structure relative to a predetermined plane, by adjusting a height of material of the machinable surface, etc.), the altering device may prepare the mating structure 408 to receive the base of a display projector assembly 406 such that, when a mating device mates the display projector assembly 406 to the frame 102 via the altered mating structure 408, the output of the display projector assembly 406 is optically aligned with the frame along a predetermined optical axis.

In additional embodiments, the mating structures 408 may be physically adjusted in other ways, such as by adding material (e.g., through securing a structure, printing a material, welding a material, etc.) to the mating structures 408 and/or by adjusting a height of one or more screws associated with the mating structures 408. A resulting plane defined by each of the mating structures 408 or portions thereof may be oriented and positioned for aligning the display projector assemblies 406(A) and/or 406(B) as discussed above.

FIG. 8 shows a view 800 of a possible configuration of the mating structure 408(A). As shown in this example, the mating structure 408(A) may have a machinable surface that is in a substantially planar initial configuration (i.e., in a substantially common plane with frame 102). The mating structure 408(A) may include and/or be made of any suitable material that may be machined by a suitable machining device, such as a polymer material, a metallic material, an organic material, and so forth.

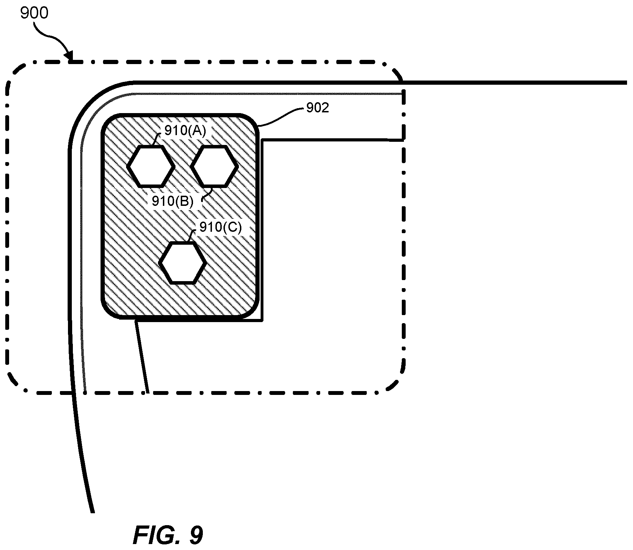

As another example, FIG. 9 shows a view 900 of an alternative mating structure 902 that includes a plurality of mounting posts 910 (e.g., a mounting post 910(A), a mounting post 910(B), and a mounting post 910(C)). Although three mounting posts are shown in FIG. 9, additional or alternative embodiments may include any suitable number of mounting posts. Like the mating structure 408(A), each of the mounting posts 910 may include and/or be made of any suitable material that may be altered by a suitable altering device, such as a polymer material, a metallic material, an organic material, and so forth. In such examples, an altering device may, instead of (or in addition to) adjusting an aspect of a surface of a mating structure, may adjust a length of one or more of the mounting posts 910 based on the determined optical alignment of a display projector assembly. In additional examples, one or more of the mounting posts 910 may be or include a screw that may be rotated to adjust a height thereof.

It may be noted that, in such embodiments, a base of a display projector assembly may include one or more post receptacles that may be configured to receive one or more of the mounting posts. Mating of such a display projector assembly to such a mating structure may include causing each post receptacle to receive a respective mounting post.

FIG. 10 includes a view 1000 that illustrates altering, based on a determined optical angle of the output of the display projector assembly, a mating structure included within a frame in accordance with some embodiments described herein. As shown, altering devices 1002 (e.g., an altering device 1002(A) and an altering device 1002(B)) may be rotary grinding devices that may be configured to, via grinding surfaces 1004 (e.g., a rotary grinding surface 1004(A) and a rotary grinding surface 1004(B)) adjust (e.g., alter one or more aspects of) the mating structures 408 (e.g., the mating structure 408(A) and the mating structure 408(B)) based on the determined optical angles of the outputs of respective display projector assemblies (e.g., the display projector assembly 406(A) and the display projector assembly 406, not shown in FIG. 10).

Although some examples of altering of a mating structure described herein may relate to reductive processes (e.g., removing of material from a mating structure), in some examples, altering of a mating structure may include an additive manufacturing process, whereby a suitable additive manufacturing device (e.g., a "3D printer") may produce a suitable intermediary structure that may be added to a mating structure (e.g., a mating structure 408(A) and/or a mating structure 408(B)). Such an altering of the mating structure may similarly provide that, when the base of a display projector assembly is mated to the frame via the mating structure, the output of the display projector assembly may be optically aligned with the frame along a predetermined optical axis to within an acceptable tolerance.

Returning to FIG. 5, at the operation 530, the base of a display projector assembly may be mated to a frame via an altered mating structure. For example, a mating device (e.g., a fastening device, an adhesive device, an affixing device, etc.) may mate the base of the display projector assembly 406(A) to the frame 102 via the altered mating structure 408(A).

Mating of a display projector assembly to a frame via an altered mating surface may be accomplished in any suitable way, such as via an adhesive, a fastening device (e.g., one or more screws), a welding process, and so forth. For example, an adhesive may be applied to the base of the display projector assembly 406(A) and/or to the altered mating structure 408(A). The display projector assembly 406(A) may thereby be affixed to the altered mating structure 408(A) by applying any suitable application force to one or both of the mating portions until the adhesive bonds the base of the display projector assembly 406(A) to the altered mating structure 408(A).

As discussed throughout the instant disclosure, the apparatuses, systems, and methods disclosed herein may provide one or more advantages over conventional options for alignment of optical systems within head-mounted displays. For example, by measuring optical output of display projector assemblies as described herein, and by then machining suitable, aligning mating geometry into the mating frame, the apparatuses, systems, and methods described herein may result in thinner, more consistent bonds between display projector assemblies and frames, further allowing for thinner, more optically stable head-mounted display devices. In addition, each instance of a frame may have slightly different geometry, such as due to manufacturing tolerances and/or different designs. The apparatuses, systems, and methods described herein may enable proper alignment of projector assemblies to frames and/or to each other even with such differences present.

Embodiments of the present disclosure may include or be implemented in conjunction with various types of artificial-reality systems. Artificial-reality systems may be implemented in a variety of different form factors and configurations. Some artificial-reality systems may be designed to work without near-eye displays (NEDs). Other artificial-reality systems may include an NED that also provides visibility into a real-world environment (such as, e.g., an augmented-reality system 1100 in FIG. 11) or that visually immerses a user in an artificial reality (such as, e.g., a virtual-reality system 1200 in FIG. 12). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 11, the augmented-reality system 1100 may include an eyewear device 1102 with a frame 1110 configured to hold a left display device 1115(A) and a right display device 1115(B) in front of a user's eyes. The display devices 1115(A) and 1115(B) may act together or independently to present an image or series of images to a user. While the augmented-reality system 1100 includes two displays, embodiments of this disclosure may be implemented in augmented-reality systems with a single NED or more than two NEDs.

In some embodiments, the augmented-reality system 1100 may include one or more sensors, such as a sensor 1140. The sensor 1140 may generate measurement signals in response to motion of the augmented-reality system 1100 and may be located on substantially any portion of the frame 1110. The sensor 1140 may represent one or more of a variety of different sensing mechanisms, such as a position sensor, an inertial measurement unit (IMU), a depth camera assembly, a structured light emitter and/or detector, or any combination thereof. In some embodiments, the augmented-reality system 1100 may or may not include the sensor 1140 or may include more than one sensor. In embodiments in which the sensor 1140 includes an IMU, the IMU may generate calibration data based on measurement signals from the sensor 1140. Examples of the sensor 1140 may include, without limitation, accelerometers, gyroscopes, magnetometers, other suitable types of sensors that detect motion, sensors used for error correction of the IMU, or some combination thereof.

In some examples, the augmented-reality system 1100 may also include a microphone array with a plurality of acoustic transducers 1120(A)- 1120(J), referred to collectively as acoustic transducers 1120. The acoustic transducers 1120 may represent transducers that detect air pressure variations induced by sound waves. Each acoustic transducer 1120 may be configured to detect sound and convert the detected sound into an electronic format (e.g., an analog or digital format). The microphone array in FIG. 11 may include, for example, ten acoustic transducers: 1120(A) and 1120(B), which may be designed to be placed inside a corresponding ear of the user, acoustic transducers 1120(C), 1120(D), 1120(E), 1120(F), 1120(G), and 1120(H), which may be positioned at various locations on the frame 1110, and/or acoustic transducers 1120(I) and 1120(J), which may be positioned on a corresponding neckband 1105.

In some embodiments, one or more of the acoustic transducers 1120(A)-(J) may be used as output transducers (e.g., speakers). For example, the acoustic transducers 1120(A) and/or 1120(B) may be earbuds or any other suitable type of headphone or speaker.

The configuration of the acoustic transducers 1120 of the microphone array may vary. While the augmented-reality system 1100 is shown in FIG. 11 as having ten acoustic transducers 1120, the number of acoustic transducers 1120 may be greater or less than ten. In some embodiments, using higher numbers of acoustic transducers 1120 may increase the amount of audio information collected and/or the sensitivity and accuracy of the audio information. In contrast, using a lower number of acoustic transducers 1120 may decrease the computing power required by an associated controller 1150 to process the collected audio information. In addition, the position of each acoustic transducer 1120 of the microphone array may vary. For example, the position of an acoustic transducer 1120 may include a defined position on the user, a defined coordinate on the frame 1110, an orientation associated with each acoustic transducer 1120, or some combination thereof.

The acoustic transducers 1120(A) and 1120(B) may be positioned on different parts of the user's ear, such as behind the pinna, behind the tragus, and/or within the auricle or fossa. Or, there may be additional acoustic transducers 1120 on or surrounding the ear in addition to the acoustic transducers 1120 inside the ear canal. Having an acoustic transducer 1120 positioned next to an ear canal of a user may enable the microphone array to collect information on how sounds arrive at the ear canal. By positioning at least two of the acoustic transducers 1120 on either side of a user's head (e.g., as binaural microphones), the augmented-reality device 1100 may simulate binaural hearing and capture a 3D stereo sound field around about a user's head. In some embodiments, the acoustic transducers 1120(A) and 1120(B) may be connected to the augmented-reality system 1100 via a wired connection 1130, and in other embodiments the acoustic transducers 1120(A) and 1120(B) may be connected to the augmented-reality system 1100 via a wireless connection (e.g., a BLUETOOTH connection). In still other embodiments, the acoustic transducers 1120(A) and 1120(B) may not be used at all in conjunction with the augmented-reality system 1100.

The acoustic transducers 1120 on the frame 1110 may be positioned in a variety of different ways, including along the length of the temples, across the bridge, above or below the display devices 1115(A) and 1115(B), or some combination thereof. The acoustic transducers 1120 may also be oriented such that the microphone array is able to detect sounds in a wide range of directions surrounding the user wearing the augmented-reality system 1100. In some embodiments, an optimization process may be performed during manufacturing of the augmented-reality system 1100 to determine relative positioning of each acoustic transducer 1120 in the microphone array.

In some examples, the augmented-reality system 1100 may include or be connected to an external device (e.g., a paired device), such as the neckband 1105. The neckband 1105 generally represents any type or form of paired device. Thus, the following discussion of the neckband 1105 may also apply to various other paired devices, such as charging cases, smart watches, smart phones, wrist bands, other wearable devices, hand-held controllers, tablet computers, laptop computers, other external compute devices, etc.

As shown, the neckband 1105 may be coupled to the eyewear device 1102 via one or more connectors. The connectors may be wired or wireless and may include electrical and/or non-electrical (e.g., structural) components. In some cases, the eyewear device 1102 and neckband 1105 may operate independently without any wired or wireless connection between them. While FIG. 11 illustrates the components of the eyewear device 1102 and neckband 1105 in example locations on the eyewear device 1102 and neckband 1105, the components may be located elsewhere and/or distributed differently on the eyewear device 1102 and/or neckband 1105. In some embodiments, the components of the eyewear device 1102 and neckband 1105 may be located on one or more additional peripheral devices paired with the eyewear device 1102, neckband 1105, or some combination thereof.

Pairing external devices, such as the neckband 1105, with augmented-reality eyewear devices may enable the eyewear devices to achieve the form factor of a pair of glasses while still providing sufficient battery and computation power for expanded capabilities. Some or all of the battery power, computational resources, and/or additional features of the augmented reality system 1100 may be provided by a paired device or shared between a paired device and an eyewear device, thus reducing the weight, heat profile, and form factor of the eyewear device overall while still retaining desired functionality. For example, the neckband 1105 may allow components that would otherwise be included on an eyewear device to be included in the neckband 1105 since users may tolerate a heavier weight load on their shoulders than they would tolerate on their heads. The neckband 1105 may also have a larger surface area over which to diffuse and disperse heat to the ambient environment. Thus, the neckband 1105 may allow for greater battery and computation capacity than might otherwise have been possible on a standalone eyewear device. Since weight carried in the neckband 1105 may be less invasive to a user than weight carried in the eyewear device 1102, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

The neckband 1105 may be communicatively coupled with the eyewear device 1102 and/or to other devices. These other devices may provide certain functions (e.g., tracking, localizing, depth mapping, processing, storage, etc.) to the augmented-reality system 1100. In the embodiment of FIG. 11, the neckband 1105 may include two acoustic transducers (e.g., 1120(I) and 1120(J)) that are part of the microphone array (or potentially form their own microphone subarray). The neckband 1105 may also include a controller 1125 and a power source 1135.

The acoustic transducers 1120(I) and 1120(J) of the neckband 1105 may be configured to detect sound and convert the detected sound into an electronic format (analog or digital). In the embodiment of FIG. 11, the acoustic transducers 1120(I) and 1120(J) may be positioned on the neckband 1105, thereby increasing the distance between the neckband acoustic transducers 1120(I) and 1120(J) and other acoustic transducers 1120 positioned on the eyewear device 1102. In some cases, increasing the distance between the acoustic transducers 1120 of the microphone array may improve the accuracy of beamforming performed via the microphone array. For example, if a sound is detected by the acoustic transducers 1120(C) and 1120(D) and the distance between the acoustic transducers 1120(C) and 1120(D) is greater than, e.g., the distance between the acoustic transducers 1120(D) and 1120(E), the determined source location of the detected sound may be more accurate than if the sound had been detected by the acoustic transducers 1120(D) and 1120(E). The controller 1125 of the neckband 1105 may process information generated by the sensors on the neckband 1105 and/or augmented-reality system 1100. For example, the controller 1125 may process information from the microphone array that describes sounds detected by the microphone array. For each detected sound, the controller 1125 may perform a direction-of-arrival (DOA) estimation to estimate a direction from which the detected sound arrived at the microphone array. As the microphone array detects sounds, the controller 1125 may populate an audio data set with the information. In embodiments in which the augmented reality system 1100 includes an inertial measurement unit, the controller 1125 may compute all inertial and spatial calculations from the IMU located on the eyewear device 1102. A connector may convey information between the augmented-reality system 1100 and the neckband 1105 and between the augmented-reality system 1100 and the controller 1125. The information may be in the form of optical data, electrical data, wireless data, or any other transmittable data form. Moving the processing of information generated by the augmented reality system 1100 to the neckband 1105 may reduce weight and heat in the eyewear device 1102, making it more comfortable to the user.

The power source 1135 in the neckband 1105 may provide power to the eyewear device 1102 and/or to the neckband 1105. The power source 1135 may include, without limitation, lithium ion batteries, lithium-polymer batteries, primary lithium batteries, alkaline batteries, or any other form of power storage. In some cases, the power source 1135 may be a wired power source. Including the power source 1135 on the neckband 1105 instead of on the eyewear device 1102 may help better distribute the weight and heat generated by the power source 1135.

As noted, some artificial-reality systems may, instead of blending an artificial reality with actual reality, substantially replace one or more of a user's sensory perceptions of the real world with a virtual experience. One example of this type of system is a head-wom display system, such as the virtual-reality system 1200 in FIG. 12, that mostly or completely covers a user's field of view. The virtual-reality system 1200 may include a front rigid body 1202 and a band 1204 shaped to fit around a user's head. The virtual-reality system 1200 may also include output audio transducers 1206(A) and 1206(B). Furthermore, while not shown in FIG. 12, the front rigid body 1202 may include one or more electronic elements, including one or more electronic displays, one or more inertial measurement units (IMUs), one or more tracking emitters or detectors, and/or any other suitable device or system for creating an artificial-reality experience.

Artificial-reality systems may include a variety of types of visual feedback mechanisms. For example, display devices in the augmented-reality system 1100 and/or virtual reality system 1200 may include one or more liquid crystal displays (LCDs), light emitting diode (LED) displays, microLED displays, organic LED (OLED) displays, digital light project (DLP) micro-displays, liquid crystal on silicon (LCoS) micro-displays, and/or any other suitable type of display screen. These artificial-reality systems may include a single display screen for both eyes or may provide a display screen for each eye, which may allow for additional flexibility for varifocal adjustments or for correcting a user's refractive error. Some of these artificial-reality systems may also include optical subsystems having one or more lenses (e.g., conventional concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some of the artificial-reality systems described herein may include one or more projection systems. For example, display devices in the augmented-reality system 1100 and/or the virtual-reality system 1200 may include micro-LED projectors that project light (using, e.g., a waveguide) into display devices, such as clear combiner lenses that allow ambient light to pass through. The display devices may refract the projected light toward a user's pupil and may enable a user to simultaneously view both artificial reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

The artificial-reality systems described herein may also include various types of computer vision components and subsystems. For example, the augmented-reality system 1100 and/or virtual-reality system 1200 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

The artificial-reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

In some embodiments, the artificial-reality systems described herein may also include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial-reality experience in one or more of these contexts and environments and/or in other contexts and environments.

In some examples, the term "substantially" in reference to a given parameter, property, or condition, may refer to a degree that one skilled in the art would understand that the given parameter, property, or condition is met with a small degree of variance, such as within acceptable manufacturing tolerances. For example, a parameter that is substantially met may be at least about 90% met, at least about 95% met, at least about 99% met, or fully met.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various example methods described and/or illustrated herein may also omit one or more of the steps described or illustrated herein or include additional steps in addition to those disclosed.

The preceding description has been provided to enable others skilled in the art to best utilize various aspects of the example embodiments disclosed herein. This example description is not intended to be exhaustive or to be limited to any precise form disclosed. Many modifications and variations are possible without departing from the scope of the present disclosure. The embodiments disclosed herein should be considered in all respects illustrative and not restrictive. Reference should be made to any claims appended hereto in determining the scope of the present disclosure.

Unless otherwise noted, the terms "connected to" and "coupled to" (and their derivatives), as used in the specification and/or claims, are to be construed as permitting both direct and indirect (i.e., via other elements or components) connection. In addition, the terms "a" or "an," as used in the specification and/or claims, are to be construed as meaning "at least one of." Finally, for ease of use, the terms "including" and "having" (and their derivatives), as used in the specification and/or claims, are interchangeable with and have the same meaning as the word "comprising."

## Claims

1. A method (500) comprising:
determining (510) an optical angle of an output of a display projector assembly (406(A), 406(B)) relative to a base of the display projector assembly (406(A), 406(B));
physically altering (520), based on the determined optical angle of the output of the display projector assembly (406(A), 406(B)), a mating structure (408(A), 408(B)) included within a frame (402) such that, when the base of the display projector assembly (406(A), 406(B)) is mated to the frame (402) via the mating structure (408(A), 408(B)), the output of the display projector assembly (406(A), 406(B)) is optically aligned with the frame (402) along a predetermined optical axis; and
mating (530) the base of the display projector assembly (406(A), 406(B)) to the frame (402) via the altered mating structure (408(A), 408(B)).

2. The method (500) of claim 1, wherein:
determining (510) the optical angle of the output of the display projector assembly (406(A), 406(B)) relative to the base of the display projector assembly (406(A), 406(B)) comprises measuring the optical alignment of the output of the display projector assembly (406(A), 406(B)) relative to a datum of the display projector assembly (406(A), 406(B)); and
altering (520) the mating structure (408(A), 408(B)) within the frame (402) comprises altering the mating structure (408(A), 408(B)) to account for an angle of the output of the display projector assembly (406(A), 406(B)) relative to the datum of the display projector assembly (406(A), 406(B)).

3. The method (500) of claim 1 or 2, wherein determining (510) the optical angle of the output of the display projector assembly (406(A), 406(B)) relative to the base of the display projector assembly (406(A), 406(B)) comprises measuring the output of the display projector assembly (406(A), 406(B)) via a collimator.

4. The method (500) of any preceding claim, wherein:
the mating structure (408(A), 408(B)) comprises a machinable surface; and
altering (520) the mating structure (408(A), 408(B)) comprises machining at least one aspect of the machinable surface.

5. The method (500) of any preceding claim, wherein:
the display projector assembly (406(A), 406(B)) comprises a mating surface; and
mating (530) the display projector assembly (406(A), 406(B)) to the frame (402) via the altered mating structure (408(A), 408(B)) comprises mating the mating surface of the display projector assembly (406(A), 406(B)) to the altered mating structure (408(A), 408(B)).

6. The method (500) of any preceding claim, wherein the mating structure (408(A), 408(B)) comprises at least one mounting post configured to be received by a corresponding post receptacle included in the display projector assembly (406(A), 406(B)).

7. The method (500) of claim 6, wherein altering (520) the mating structure (408(A), 408(B)) comprises adjusting a length of the at least one mounting post based on the determined optical alignment of the display projector assembly (406(A), 406(B)).

8. The method (500) of claim 6 or 7, wherein the at least one mounting post comprises at least three mounting posts;
preferably wherein, for each mounting post included in the mating structure (408(A), 408(B)), mating (530) the display projector assembly (406(A), 406(B)) to the frame (402) via the altered mating structure (408(A), 408(B)) comprises causing the post receptacle to receive the mounting post.

9. The method (500) of any preceding claim, further comprising:
mounting a waveguide to the frame (402); and
aligning the output of the display projector assembly (406(A), 406(B)) with an input grating of the waveguide;
preferably wherein the frame (402) is a head-mounted display frame (1110).

10. A system comprising:
an optical sensor (602) configured to determine an optical angle of an output of a display projector assembly (406(A), 406(B)) relative to a base of the display projector assembly (406(A), 406(B));
an altering device (1002(A), 1002(B)) configured to physically alter a mating structure (408(A), 408(B)) included within a frame (402) based on the determined optical angle of the display projector assembly (406(A), 406(B)) such that, when the display projector assembly (406(A), 406(B)) is mated to the frame (402) via the mating structure (408(A), 408(B)), the output of the display projector assembly (406(A), 406(B)) is optically aligned with the frame (402) along a predetermined optical axis; and
a mating device configured to mate the display projector assembly (406(A), 406(B)) to the frame (402) via the altered mating structure (408(A), 408(B)).

11. The system of claim 10, wherein the optical sensor (602) is further configured to determine the optical angle of the output of the display projector assembly (406(A), 406(B)) by:
measuring the optical angle of the output of the display projector assembly (406(A), 406(B)) relative to a datum of the display projector assembly (406(A), 406(B)); and/or
measuring the output of the display projector assembly (406(A), 406(B)) via a collimator.

12. The system of claim 10 or 11, wherein:
the mating structure (408(A), 408(B)) of the frame (402) comprises a machinable planar surface; and
the altering device (1002(A), 1002(B)) is further configured to physically alter the mating structure (408(A), 408(B)) by machining at least one aspect of the machinable planar surface;
preferably wherein:
the display projector assembly (406(A), 406(B)) comprises a mounting structure; and
the mating device mates the display projector assembly (406(A), 406(B)) to the frame (402) via the machined mating structure by mating the mounting structure of the display projector assembly (406(A), 406(B)) to the altered mating structure (408(A), 408(B)) of the frame (402).

13. The system of any of claims 10 to 12, wherein the frame (402) comprises at least one mounting post configured to be received by a corresponding post receptacle included in the display projector assembly (406(A), 406(B));
preferably wherein the mating device is further configured to, for each mounting post included in the frame (402), mate the display projector assembly (406(A), 406(B)) to the frame (402) via the altered mating structure (408(A), 408(B)) by causing the corresponding post receptacle to receive the mounting post.

## Patentansprüche

1. Ein Verfahren (500), das Folgendes beinhaltet:
Bestimmen (510) eines optischen Winkels einer Ausgabe einer Anzeigeprojektoranordnung (406(A), 406(B)) relativ zu einer Basis der Anzeigeprojektoranordnung (406(A), 406(B));
physisches Ändern (520), basierend auf dem bestimmten optischen Winkel der Ausgabe der Anzeigeprojektoranordnung (406(A), 406(B)), einer Passstruktur (408(A), 408(B)), die in einem Rahmen (402) umfasst ist, sodass, wenn die Basis der Anzeigeprojektoranordnung (406(A), 406(B)) über die Passstruktur (408(A), 408(B)) mit dem Rahmen (402) zusammengepasst wird, die Ausgabe der Anzeigeprojektoranordnung (406(A), 406(B)) entlang einer vorbestimmten optischen Achse mit dem Rahmen (402) optisch ausgerichtet wird; und
Zusammenpassen (530) der Basis der Anzeigeprojektoranordnung (406(A), 406(B)) mit dem Rahmen (402) über die geänderte Passstruktur (408(A), 408(B)).

2. Verfahren (500) gemäß Anspruch 1, wobei:
das Bestimmen (510) des optischen Winkels der Ausgabe der Anzeigeprojektoranordnung (406(A), 406(B)) relativ zu der Basis der Anzeigeprojektoranordnung (406(A), 406(B)) das Messen der optischen Ausrichtung der Ausgabe der Anzeigeprojektoranordnung (406(A), 406(B)) relativ zu einem Bezugspunkt der Anzeigeprojektoranordnung (406(A), 406(B)) beinhaltet; und
das Ändern (520) der Passstruktur (408(A), 408(B)) in dem Rahmen (402) das Ändern der Passstruktur (408(A), 408(B)) beinhaltet, um einen Winkel der Ausgabe der Anzeigeprojektoranordnung (406(A), 406(B)) relativ zu dem Bezugspunkt der Anzeigeprojektoranordnung (406(A), 406(B)) zu berücksichtigen.

3. Verfahren (500) gemäß Anspruch 1 oder 2, wobei das Bestimmen (510) des optischen Winkels der Ausgabe der Anzeigeprojektoranordnung (406(A), 406(B)) relativ zu der Basis der Anzeigeprojektoranordnung (406(A), 406(B)) das Messen der Ausgabe der Anzeigeprojektoranordnung (406(A), 406(B)) über einen Kollimator beinhaltet.

4. Verfahren (500) gemäß einem der vorhergehenden Ansprüche, wobei:
die Passstruktur (408(A), 408(B)) eine bearbeitbare Oberfläche beinhaltet; und
das Ändern (520) der Passstruktur (408(A), 408(B)) das Bearbeiten von mindestens einem Aspekt der bearbeitbaren Oberfläche beinhaltet.

5. Verfahren (500) gemäß einem der vorhergehenden Ansprüche, wobei:
die Anzeigeprojektoranordnung (406(A), 406(B)) eine Passoberfläche beinhaltet; und
das Zusammenpassen (530) der Anzeigeprojektoranordnung (406(A), 406(B)) mit dem Rahmen (402) über die geänderte Passstruktur (408(A), 408(B)) das Zusammenpassen der Passoberfläche der Anzeigeprojektoranordnung (406(A), 406(B)) mit der geänderten Passstruktur (408(A), 408(B)) beinhaltet.

6. Verfahren (500) gemäß einem der vorhergehenden Ansprüche, wobei die Passstruktur (408(A), 408(B)) mindestens einen Montagepfosten beinhaltet, der konfiguriert ist, um von einer entsprechenden Pfostenaufnahmeeinrichtung aufgenommen zu werden, die in der Anzeigeprojektoranordnung (406(A), 406(B)) umfasst ist.

7. Verfahren (500) gemäß Anspruch 6, wobei das Ändern (520) der Passstruktur (408(A), 408(B)) das Einstellen einer Länge des mindestens einen Montagepfostens basierend auf der bestimmten optischen Ausrichtung der Anzeigeprojektoranordnung (406(A), 406(B)) beinhaltet.

8. Verfahren (500) gemäß Anspruch 6 oder 7, wobei der mindestens eine Montagepfosten mindestens drei Montagepfosten beinhaltet;
wobei vorzugsweise für jeden Montagepfosten, der in der Passstruktur (408(A), 408(B)) umfasst ist, das Zusammenpassen (530) der Anzeigeprojektoranordnung (406(A), 406(B)) mit dem Rahmen (402) über die geänderte Passstruktur (408(A), 408(B)) das Bewirken beinhaltet, dass die Pfostenaufnahmeeinrichtung den Montagepfosten aufnimmt.

9. Verfahren (500) gemäß einem der vorhergehenden Ansprüche, das ferner Folgendes beinhaltet:
Montieren eines Wellenleiters an dem Rahmen (402); und
Ausrichten der Ausgabe der Anzeigeprojektoranordnung (406(A), 406(B)) mit einem Eingangsgitter des Wellenleiters;
wobei der Rahmen (402) vorzugsweise ein Head-Mounted-Display-Rahmen (1110) ist.

10. Ein System, das Folgendes beinhaltet:
einen optischen Sensor (602), der konfiguriert ist, um einen optischen Winkel einer Ausgabe einer Anzeigeprojektoranordnung (406(A), 406(B)) relativ zu einer Basis der Anzeigeprojektoranordnung (406(A), 406(B)) zu bestimmen;
eine Änderungsvorrichtung (1002(A), 1002(B)), die konfiguriert ist, um eine Passstruktur (408(A), 408(B)), die in einem Rahmen (402) umfasst ist, basierend auf dem bestimmten optischen Winkel der Anzeigeprojektoranordnung (406(A), 406(B)) physisch zu ändern, sodass, wenn die Anzeigeprojektoranordnung (406(A), 406(B)) über die Passstruktur (408(A), 408(B)) mit dem Rahmen (402) zusammengepasst wird, die Ausgabe der Anzeigeprojektoranordnung (406(A), 406(B)) entlang einer vorbestimmten optischen Achse mit dem Rahmen (402) optisch ausgerichtet wird; und
eine Passvorrichtung, die konfiguriert ist, um die Anzeigeprojektoranordnung (406(A), 406(B)) über die geänderte Passstruktur (408(A), 408(B)) mit dem Rahmen (402) zusammenzupassen.

11. System gemäß Anspruch 10, wobei der optische Sensor (602) ferner konfiguriert ist, um den optischen Winkel der Ausgabe der Anzeigeprojektoranordnung (406(A), 406(B)) durch Folgendes zu bestimmen:
Messen des optischen Winkels der Ausgabe der Anzeigeprojektoranordnung (406(A), 406(B)) relativ zu einem Bezugspunkt der Anzeigeprojektoranordnung (406(A), 406(B)); und/oder
Messen der Ausgabe der Anzeigeprojektoranordnung (406(A), 406(B)) über einen Kollimator.

12. System gemäß Anspruch 10 oder 11, wobei:
die Passstruktur (408(A), 408(B)) des Rahmens (402) eine bearbeitbare planare Oberfläche beinhaltet; und
die Änderungsvorrichtung (1002(A), 1002(B)) ferner konfiguriert ist, um die Passstruktur (408(A), 408(B)) durch Bearbeiten von mindestens einem Aspekt der bearbeitbaren planaren Oberfläche physisch zu ändern;
wobei vorzugsweise:
die Anzeigeprojektoranordnung (406(A), 406(B)) eine Montagestruktur beinhaltet; und
die Passvorrichtung die Anzeigeprojektoranordnung (406(A), 406(B)) über die bearbeitete Passstruktur mit dem Rahmen (402) durch Zusammenpassen der Montagestruktur der Anzeigeprojektoranordnung (406(A), 406(B)) mit der geänderten Passstruktur (408(A), 408(B)) des Rahmens (402) zusammenpasst.

13. System gemäß einem der Ansprüche 10 bis 12, wobei der Rahmen (402) mindestens einen Montagepfosten beinhaltet, der konfiguriert ist, um von einer entsprechenden Pfostenaufnahmeeinrichtung aufgenommen zu werden, die in der Anzeigeprojektoranordnung (406(A), 406(B)) umfasst ist;
wobei vorzugsweise die Passvorrichtung ferner konfiguriert ist, um für jeden Montagepfosten, der in dem Rahmen (402) umfasst ist, die Anzeigeprojektoranordnung (406(A), 406(B)) über die geänderte Passstruktur (408(A), 408(B)) mit dem Rahmen (402) durch Bewirken, dass die entsprechende Pfostenaufnahmeeinrichtung den Montagepfosten aufnimmt, zusammenzupassen.

## Revendications

1. Un procédé (500) comprenant :
le fait de déterminer (510) un angle optique d'une sortie d'un ensemble projecteur d'affichage (406(A), 406(B)) par rapport à une base de l'ensemble projecteur d'affichage (406(A), 406(B)) ;
le fait de modifier physiquement (520), sur la base de l'angle optique déterminé de la sortie de l'ensemble projecteur d'affichage (406(A), 406(B)), une structure d'accouplement (408(A), 408(B)) incluse dans une monture (402) de telle sorte que, lorsque la base de l'ensemble projecteur d'affichage (406(A), 406(B)) est accouplée à la monture (402) via la structure d'accouplement (408(A), 408(B)), la sortie de l'ensemble projecteur d'affichage (406(A), 406(B)) est optiquement alignée avec la monture (402) le long d'un axe optique prédéterminé ; et
le fait d'accoupler (530) la base de l'ensemble projecteur d'affichage (406(A), 406(B)) à la monture (402) via la structure d'accouplement (408(A), 408(B)) modifiée.

2. Le procédé (500) de la revendication 1, dans lequel :
le fait de déterminer (510) l'angle optique de la sortie de l'ensemble projecteur d'affichage (406(A), 406(B)) par rapport à la base de l'ensemble projecteur d'affichage (406(A), 406(B)) comprend le fait de mesurer l'alignement optique de la sortie de l'ensemble projecteur d'affichage (406(A), 406(B)) par rapport à un élément de référence de l'ensemble projecteur d'affichage (406(A), 406(B)) ; et
le fait de modifier (520) la structure d'accouplement (408(A), 408(B)) dans la monture (402) comprend le fait de modifier la structure d'accouplement (408(A), 408(B)) pour tenir compte d'un angle de la sortie de l'ensemble projecteur d'affichage (406(A), 406(B)) par rapport à l'élément de référence de l'ensemble projecteur d'affichage (406(A), 406(B)).

3. Le procédé (500) de la revendication 1 ou 2, dans lequel le fait de déterminer (510) l'angle optique de la sortie de l'ensemble projecteur d'affichage (406(A), 406(B)) par rapport à la base de l'ensemble projecteur d'affichage (406(A), 406(B)) comprend le fait de mesurer la sortie de l'ensemble projecteur d'affichage (406(A), 406(B)) via un collimateur.

4. Le procédé (500) de n'importe quelle revendication précédente, dans lequel :
la structure d'accouplement (408(A), 408(B)) comprend une surface usinable ; et
le fait de modifier (520) la structure d'accouplement (408(A), 408(B)) comprend le fait d'usiner au moins un aspect de la surface usinable.

5. Le procédé (500) de n'importe quelle revendication précédente, dans lequel :
l'ensemble projecteur d'affichage (406(A), 406(B)) comprend une surface d'accouplement ; et
le fait d'accoupler (530) l'ensemble projecteur d'affichage (406(A), 406(B)) à la monture (402) via la structure d'accouplement (408(A), 408(B)) modifiée comprend le fait d'accoupler la surface d'accouplement de l'ensemble projecteur d'affichage (406(A), 406(B)) à la structure d'accouplement (408(A), 408(B)) modifiée.

6. Le procédé (500) de n'importe quelle revendication précédente, dans lequel la structure d'accouplement (408(A), 408(B)) comprend au moins un montant configuré pour être reçu par un réceptacle de montant correspondant inclus dans l'ensemble projecteur d'affichage (406(A), 406(B)).

7. Le procédé (500) de la revendication 6, dans lequel le fait de modifier (520) la structure d'accouplement (408(A), 408(B)) comprend le fait d'ajuster une longueur de l'au moins un montant sur la base de l'alignement optique déterminé de l'ensemble projecteur d'affichage (406(A), 406(B)).

8. Le procédé (500) de la revendication 6 ou 7, dans lequel l'au moins un montant comprend au moins trois montants ;
de préférence dans lequel, pour chaque montant inclus dans la structure d'accouplement (408(A), 408(B)), le fait d'accoupler (530) l'ensemble projecteur d'affichage (406(A), 406(B)) à la monture (402) via la structure d'accouplement (408(A), 408(B)) modifiée comprend le fait d'amener le réceptacle de montant à recevoir le montant.

9. Le procédé (500) de n'importe quelle revendication précédente, comprenant en outre :
le fait de monter un guide d'ondes sur la monture (402) ; et
le fait d'aligner la sortie de l'ensemble projecteur d'affichage (406(A), 406(B)) avec un réseau d'entrée du guide d'ondes ;
de préférence dans lequel la monture (402) est une monture pour visiocasque (1110).

10. Un système comprenant :
un capteur optique (602) configuré pour déterminer un angle optique d'une sortie d'un ensemble projecteur d'affichage (406(A), 406(B)) par rapport à une base de l'ensemble projecteur d'affichage (406(A), 406(B)) ;
un dispositif de modification (1002(A), 1002(B)) configuré pour modifier physiquement une structure d'accouplement (408(A), 408(B)) incluse dans une monture (402) sur la base de l'angle optique déterminé de l'ensemble projecteur d'affichage (406(A), 406(B)) de telle sorte que, lorsque l'ensemble projecteur d'affichage (406(A), 406(B)) est accouplé à la monture (402) via la structure d'accouplement (408(A), 408(B)), la sortie de l'ensemble projecteur d'affichage (406(A), 406(B)) est optiquement alignée avec la monture (402) le long d'un axe optique prédéterminé ; et
un dispositif d'accouplement configuré pour accoupler l'ensemble projecteur d'affichage (406(A), 406(B)) à la monture (402) via la structure d'accouplement (408(A), 408(B)) modifiée.

11. Le système de la revendication 10, dans lequel le capteur optique (602) est en outre configuré pour déterminer l'angle optique de la sortie de l'ensemble projecteur d'affichage (406(A), 406(B)) par :
le fait de mesurer l'angle optique de la sortie de l'ensemble projecteur d'affichage (406(A), 406(B)) par rapport à un élément de référence de l'ensemble projecteur d'affichage (406(A), 406(B)) ; et/ou
le fait de mesurer la sortie de l'ensemble projecteur d'affichage (406(A), 406(B)) via un collimateur.

12. Le système de la revendication 10 ou 11, dans lequel :
la structure d'accouplement (408(A), 408(B)) de la monture (402) comprend une surface plane usinable ; et
le dispositif de modification (1002(A), 1002(B)) est en outre configuré pour modifier physiquement la structure d'accouplement (408(A), 408(B)) par le fait d'usiner au moins un aspect de la surface plane usinable ;
de préférence dans lequel :
l'ensemble projecteur d'affichage (406(A), 406(B)) comprend une structure de montage ; et
le dispositif d'accouplement accouple l'ensemble projecteur d'affichage (406(A), 406(B)) à la monture (402) via la structure d'accouplement usinée par le fait d'accoupler la structure de montage de l'ensemble projecteur d'affichage (406(A), 406(B)) à la structure d'accouplement (408(A), 408(B)) modifiée de la monture (402).

13. Le système de n'importe lesquelles des revendications 10 à 12, dans lequel la monture (402) comprend au moins un montant configuré pour être reçu par un réceptacle de montant correspondant inclus dans l'ensemble projecteur d'affichage (406(A), 406(B)) ; de préférence dans lequel le dispositif d'accouplement est en outre configuré pour, pour chaque montant inclus dans la monture (402), accoupler l'ensemble projecteur d'affichage (406(A), 406(B)) à la monture (402) via la structure d'accouplement (408(A), 408(B)) modifiée par le fait d'amener le réceptacle de montant correspondant à recevoir le montant.
